# EUROPEAN PATENT APPLICATION

(11) **EP 1 309 192 A2**
(43) Date of publication of application: **07.05.2003**
(21) Application number: 02024252.5
(22) Date of filing: 31.10.2002
(51) Int. Cl.: H04N 5/765

(54) **Playback control apparatus**

(30) Priority: 02.11.2001 JP 2001337657
(71) Applicant: MATSUSHITA ELECTRIC INDUSTRIAL CO., LTD., Kadoma-shi, Osaka-fu (JP)
(72) Inventor: Sasaki, Hirokazu, Kyoto-shi, Kyoto-fu 605-0981 (JP)
(74) Representative: Gassner, Wolfgang, Dr.

(57) **Abstract**

In a playback control apparatus (11, 115a, 112a) for controlling a playback apparatus (100a) that plays back a content (C) and transmits the content to a recording apparatus (200a) for external transfer, a data manager (111) sequentially transmits a plurality of pieces of content data (Dc1 through Dcn) from a content source (110) to the recording apparatus (200a). A command transmitter/receiver (114) determines whether the recording apparatus (200a) is capable of recording. Based on the determination result, the data transmitter (111) is controlled. Thus, it is possible to provide a playback control method and a playback control apparatus that can discontinue a playback process carried out by the playback apparatus even when the recording apparatus falls into a state of incapable of recording the content while the content is being transferred from the playback apparatus to the recording apparatus.

## Description

### BACKGROUND OF THE INVENTION

### Field of the Invention

The present invention relates to playback control schemes to be used when contents recorded on a video tape, a hard disk, or the like are played back and externally sent out for transfer or copy. More specifically, the present invention relates to a method and apparatus for playback control that can automatically stop playback of contents when a recorder for recording the contents becomes incapable of recording.

### Description of the Background Art

In one conventional recording control scheme that has been utilized for videocassette recorders, two modes are available for selection. In a first recording mode, automatic switching between recording and pause of recording is carried out. In a second recording mode, such automatic switching is not carried out. At the time of dubbing from one videocassette recorder (hereinafter, playback VCR) to another videocassette recorder (hereinafter recording VCR), the recording VCR can be controlled so as to perform recording and pause of recording or so as not to perform such operations, based on the presence or absence of a video signal from the playback VCR.

In the above-mentioned recording control scheme, the recording VCR is structured so as to selectively perform the first and second recording mode based on a control signal externally supplied. That is, the playback VCR has a video cassette inserted therein to reproduce a video signal therefrom for supply to the recording VCR, and the recording VCR generates a control signal based on the presence or absence of a video signal and supplies the control signal to the playback VCR. Consequently, at the time of dubbing between two video players, the recording mode at the recording VCR can be controlled based on the presence or absence of a video signal.

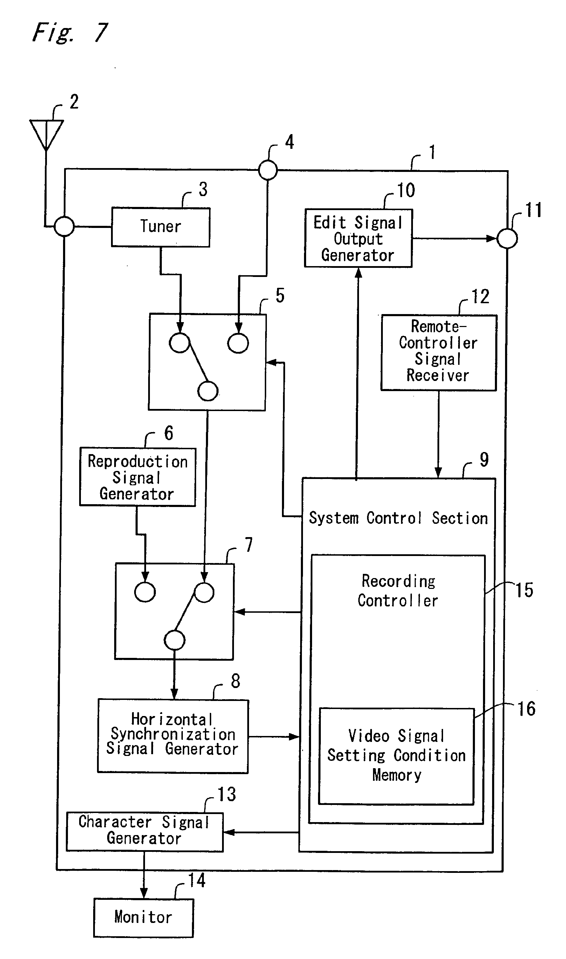

FIG. 7 illustrates the structure of a playback VCR 1 suggested in Japanese Patent Laid-Open Publication No. 5-166252. As illustrated, the playback VCR 1 includes an antenna 2, a tuner 3, an external video signal input terminal 4, a first switching section 5, a reproduction signal generator 6, a second switching section 7, a horizontal synchronizing signal generator 8, a system control section 9, an edit signal output section 10, an edit signal output terminal 11, a remote-controller signal receiver 12, a character signal generator 13, a monitor 14, a recording controller 15, and a video signal setting condition memory 16.

Broadcast waves transmitted from a broadcast station are received at the antenna 2 and are supplied to the tuner 3. The tuner 3 extracts signals representing a specific program from the received broadcast waves, and forwards the extracted signals to the first switching section 5. Video signals supplied from an external device are supplied through the external video signal input terminal 4 to the first switching section 5. The first switching section 5 selects either of the signals from the tuner 3 or those from the external video signal input terminal 4, and supplies the selected signals to the second switching section 7. The reproduction signal generator 6 reproduces video signals recorded on a video tape, and outputs the reproduced video signals to the second switching section 7.

The second switching section 7 selects either of the signals from the first switching section 5 or those from the reproduction signal generator 6, and outputs the selected signals to the horizontal synchronizing signal generator 8. The horizontal synchronizing signal generator 8 generates horizontal synchronizing signals from the video signals supplied from the second switching section 7, and outputs the generated horizontal synchronizing signals to the system control section 9.

The system control section 9 controls the operation of the playback VCR 1 based on instructions from a user through the remote-controller signal receiver 12 and the horizontal synchronization signals supplied from the horizontal synchronizing signal generator 8. The system control section 9 is provided with a recording controller 15 for controlling a playback operation of the playback VCR 1 and a recording operation of a recording VCR at the time of dubbing.

The recording controller 15 is provided with a video signal setting condition memory 16 for storing setting conditions of the first recording mode and the second recording mode. The recording controller 15 always monitors the presence or absence of a video signal based on the presence or absence of a horizontal synchronizing signal outputted from the horizontal synchronizing signal generator 8. Also, the recording controller 15 keeps track of which operation mode is active at the recording VCR, such as a video-cut setting operation. Then, the recording controller 15 determines the recording operation of the recording VCR according to the setting conditions stored in the video signal setting condition memory 16.

The system control section 9 outputs a control signal based on the determined recording operation to the edit signal output section 10. The edit signal output section 10 generates an edit signal indicative of an instruction for pause of recording or for release of pause of recording. The edit signal is forwarded through the edit signal output terminal 11 to the recording VCR. The recording VCR performs recording in an appropriate recording mode based on the edit signal.

The character signal generator 13 causes the monitor 14 to display characters based on a serial data signal indicative of character code input from the system control section 9.

As such, at the time of dubbing from the playback VCR to the recording VCR, the recording mode of the recording VCR can be controlled according to the presence or absence of a video signal at the playback VCR.

In the above-described playback control scheme, a control signal for designating a recording operation is generated and output from the edit signal output section 10 to the recording VCR based on the presence or absence of a video signal from the playback VCR 1. More specifically, the control signal, on which the playback VCR 1 depends when selecting and performing the recording mode, is generated by the playback VCR irrespectively of the state of the recording VCR. Furthermore, the recording VCR does not provide any feedback to the playback VCR 1. That is, the playback operation of the playback VCR 1 is controlled also irrespectively of the state of the recording VCR.

As a result, even when the recording VCR becomes incapable of recording for some reason while dubbing video signals being played back and forwarded from the playback VCR 1, the playback VCR 1 continues the playback operation. In this case, as clear from above, dubbing from the playback VCR 1 to the recording VCR cannot be completely achieved.

Still further, when video signals to be dubbed are prohibited from being copied due to copyright protection, the contents corresponding to the video signals are not allowed to exist both in the playback VCR 1 and the recording VCR at the same time. In this case, playback and recording operations have to performed so that the contents are completely forwarded from the playback VCR 1 to the recording VCR. That is, the playback VCR 1 reads and plays back a predetermined amount of content data corresponding to the video signals, and then deletes the content data, while the recording VCR records the video signals corresponding to the deleted content data. Such playback and recording processes of content data are hereinafter referred to as a content transfer process.

In a content transfer process, the contents read by the playback VCR are deleted and then recorded by the recording VCR. Therefore, even when the recording VCR is incapable of recording, the contents that have been read and deleted are outputted to the malfunctioned recording VCR. Consequently, in some cases, the complete set of contents may not exist in either the playback VCR 1 or the recording VCR.

### SUMMARY OF THE INVENTION

The present invention is made to get around the above-mentioned problems. An object of the present invention is to provide a playback control method for use when the entire or part of content information, not restrictive to video signals, is played back from a content source and is then transferred or copied as being recorded on another medium, and a playback control apparatus using the playback control method.

The present invention has the following features to attain the object above.

A first aspect of the present invention is directed to a playback control apparatus that controls operations of playing back a content supplied from a content source and transmitting the content to a recording apparatus for achieving external transfer or copy carried out by a playback apparatus. The playback control apparatus includes:
a content data transmitting section for sequentially transmitting a plurality of pieces of content data that form the content from the content source to the recording apparatus;
a recording apparatus monitoring section for determining whether the recording apparatus is capable of recording; and
a content data transmission control section for controlling the content data transmitting means based on the determination result obtained by the recording apparatus monitoring means.

As described above, in the first aspect, it is possible to control the operation of transmitting the content data from the playback apparatus, thereby preventing incomplete content transfer.

According to a second aspect based on the first aspect, when the recording apparatus monitoring section determines that the recording apparatus is not capable of recording, the content data transmission control section prohibits the content data transmitting section from transmitting the plurality of pieces of content data.

As described above, in the second aspect, when the recording apparatus is incapable of recording, the content data is not transmitted from the playback apparatus to the recording apparatus, thereby preventing incomplete content transfer. More specifically, when the recording apparatus is incapable of recording, the content playback process of the playback apparatus is stopped.

According to a third aspect based on the first aspect, when the recording apparatus monitoring means determines that the recording apparatus is capable of recording, the content data transmission control section causes the content data transmitting means to delete the transmitted plurality of pieces of content data from the content source.

According to a fourth aspect based on the first aspect, the recording apparatus monitor section determines whether the recording apparatus is capable of recording based on state information reported from the recording apparatus, the state information indicating that the recording apparatus has changed to a state being incapable of recording.

According to a fifth aspect based on the fourth aspect, the state information indicates that the recording apparatus has changed to a state being powered off.

According to a sixth aspect based on the first aspect, the recording apparatus monitoring section includes a communications path monitor section for detecting whether a communications path for communications with the recording apparatus has been cut off, and when the communications path monitor section detects that the communications path has been cut off, determines that the recording apparatus is incapable of recording.

According to a seventh aspect based on the first aspect, the recording apparatus monitoring section includes communications path monitor section for detecting whether isochronous connection for communications with the recording apparatus has been cut off, and when the communications path monitoring section detects that the isochronous connection has been cut off, determines that the recording apparatus is incapable of recording.

According to an eighth aspect based on the first aspect, the recording apparatus monitoring section includes a plug monitor section for detecting whether an online bit of a plug control register corresponding to isochronous connection for communications with the recording apparatus is OFF, and when the plug monitor section detects that the online bit of the plug control register is OFF, determines that the recording apparatus is incapable of recording.

A ninth aspect of the present invention is directed to a recording apparatus that records a content transmitted from a playback apparatus for achieving transfer of the content from the playback apparatus. The recording apparatus includes:
content recording means for recording the content transmitted from the playback apparatus on a recording medium; and
state information generating means for generating state information indicating whether the content recording means is capable of recording the content.

A tenth aspect of the present invention is directed to a playback control method that controls operations of playing back a content supplied from a content source and transmitting the content to a recording apparatus for achieving external transfer carried out by a playback apparatus. The playback control method includes:
a content data transmitting step of sequentially transmitting a plurality of pieces of content data forming the content from the content source to the recording apparatus;
a monitoring step of determining whether the recording apparatus is capable of recording; and
an inhibiting step of inhibiting the content data transmitting step when it is determined in the monitoring step that the recording apparatus is not capable of recording.

According to an eleventh aspect based on the tenth aspect, the playback control method further includes a content data deleting step of deleting the transmitted plurality pieces of content data from the content source when it is determined in the monitoring step that the recording apparatus is capable of recording.

A twelfth aspect of the present invention is directed to a recording control method that controls an operation of recording a content transmitted from the playback apparatus for achieving transfer of the content from the playback apparatus carried out by a recording apparatus. The playback control method includes:
a content data recording step of recording the content transmitted from the playback apparatus in a recording medium; and
a state information generating step of generating state information indicating whether the content recording step can be performed.

A thirteenth aspect of the present invention is directed to a computer program causing a computer to execute the playback control method according to the tenth aspect.

A fourteenth aspect of the present invention is directed to a computer readable medium having stored therein a program causing a computer to perform the playback control method according to the tenth aspect.

A fifteen aspect of the present invention is directed to a computer program causing a computer to execute the recording control method according to the twelfth aspect.

A sixteen aspect of the present invention is directed to a computer readable medium having stored therein a program causing a computer to perform the recording control method according to the twelfth aspect.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating the configuration of a content transfer system according to a first embodiment of the present invention;
FIG. 2 is an illustration for describing a method of identifying and managing content data Dc in each processing stage;
FIG. 3 is a flowchart showing a content transfer process performed by a playback apparatus shown in FIG. 1;
FIG. 4 is a block diagram illustrating the configuration of a content transfer system according to a second embodiment of the present invention;
FIG. 5 is a block diagram illustrating a content transfer system according to a third embodiment of the present invention;
FIG. 6 is a block diagram illustrating a content transfer system according to a fourth embodiment of the present invention; and
FIG. 7 is a block diagram illustrating the structure of a videocassette recorder to which a conventional recording control method is applied.

### DESCRIPTION OF THE PREFERRED EMBODIMENTS

### (First embodiment)

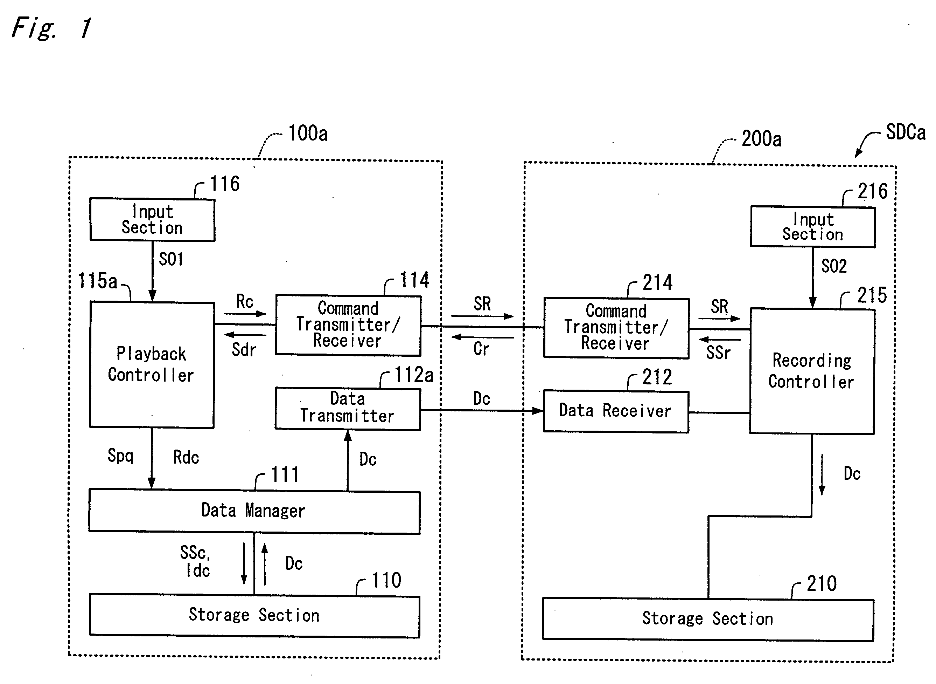

With reference to FIGS. 1, 2, and 3, a playback control apparatus according to a first embodiment of the present invention is described below. Note that, although the present invention can be applied to both transfer and copy of contents, mainly described herein is transfer of contents in the present embodiment.

FIG. 1 illustrates a content transfer system SDCa having incorporated therein the playback control apparatus according to the first embodiment of the present invention. The content transfer system SDCa is broadly divided into two apparatuses, a playback apparatus 100a and a recording apparatus 200a. The playback apparatus 100a plays back a content C stored therein to generate transferable or copiable content data Dc for output to the recording apparatus 200a. The recording apparatus 200a records the content data Dc received from the playback apparatus 100a in the storage section 210, and reproduces the content C.

During such playback and recording processes, if the playback apparatus 100a deletes the content C corresponding to the reproduced data (the content data Dc) to be supplied to the recording apparatus 200a, such an operation is hereinafter referred to as "transfer". On the other hand, if the playback apparatus 100a supplies the content C to the recording apparatus 200a without deleting the stored content C, such an operation is hereinafter referred to as "copy". Furthermore, if the recording apparatus 200a changes, while recording, to be incapable of recording the content data Dc due to internal or external factors such as a user's operation, the recording apparatus 200 can report to the playback apparatus 100a as such. Based on the report output from the recording apparatus 200a, the playback apparatus 100a controls a transfer or copy operation of the content C.

More specifically, the recording apparatus 200a issues recording-capable/incapable information indicative of whether the recording apparatus 200a is capable of recording or not as a recording-capable/incapable report command Cr. Based on the recording-capable/incapable information (recording-capable/incapable report command Cr), the playback apparatus 100a detects that the recording apparatus 200a has changed in state from recording-capable to recording-incapable, and vice versa. Note that the playback apparatus 100a and the recording apparatus 200a can exchange data other than contents with each other. However, exchange of data other than contents is not particularly described herein unless otherwise required.

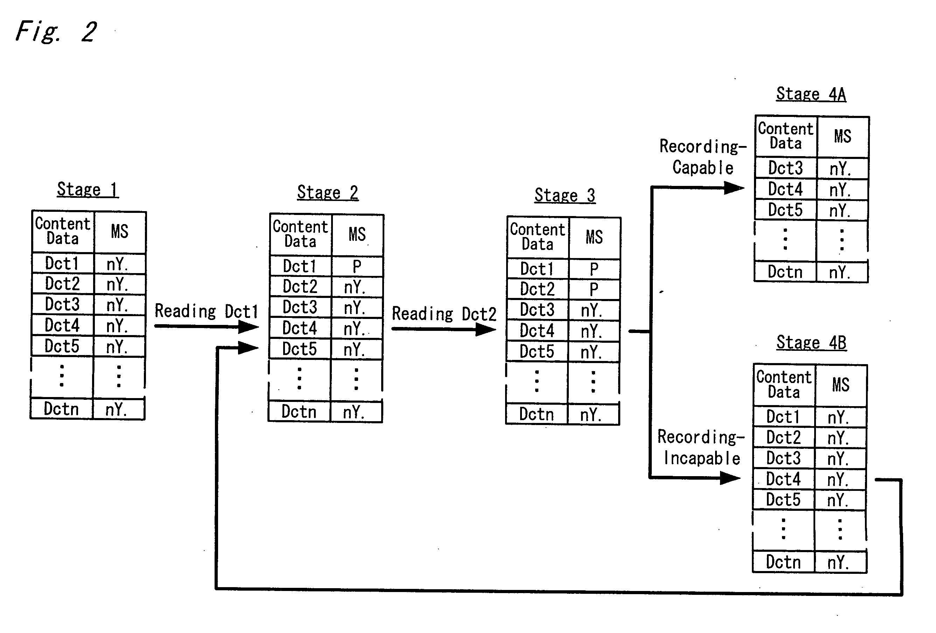

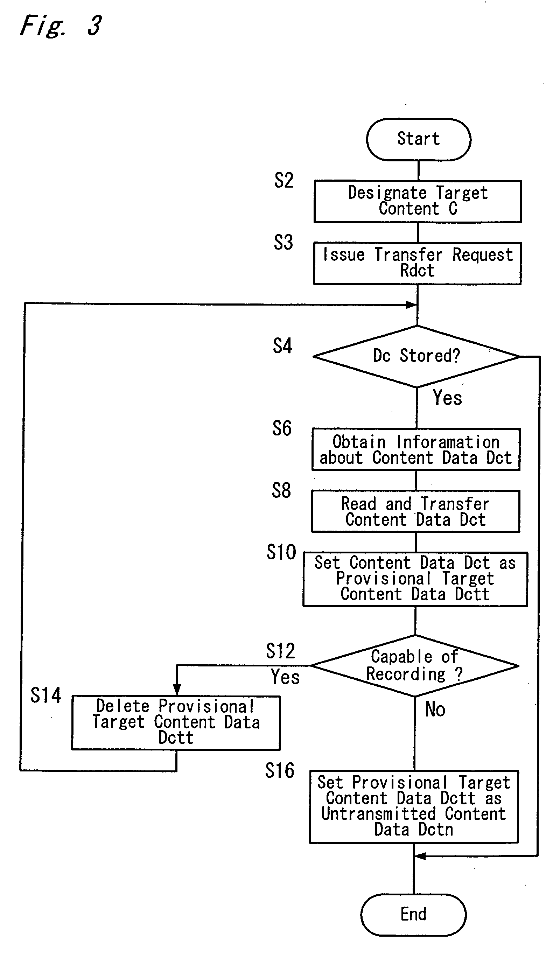

The playback apparatus 100a includes a storage section 110, a data manager 111, a data transmitter 112a, a command transmitter/receiver 114, a playback controller 115a, and an input section 116. The storage section 110 stores content data Dc including video signals composed of still pictures or motion pictures, audio signals, and /or data. Furthermore, in response to a request from the data manager 111, the storage section 110 outputs the stored content data Dc to the data manager 111. How to store and output the content data Dc in the storage section 110 is described further below in detail with reference to FIGS. 2 and 3.

The data manager 111 causes the content data Dc to be read from the storage section 110 for playback, and causes the content data Dc to be deleted for transfer to the recording apparatus 200a, thereby achieving transfer of the content C. How to playback and delete the content Dc from the storage section 110 is also described further below in detail with reference to FIGS. 2 and 3.

The data transmitter 112a transmits the content data Dc read by the data manager 11 from the storage section 110 to the recording apparatus 200a, thereby achieving transfer of the content C.

The command transmitter/receiver 114 receives a recording-capable/incapable notification command Cr from the command transmitter/receiver 214 of the recording apparatus 200a. The recording-capable/incapable report command Cr indicates that the recording apparatus 200a has changed in state from recording-capable to recording-incapable, and vice versa. The command transmitter/receiver 114 interprets the recording-capable/incapable report command Cr, and then outputs an interpretation result Ra to the playback controller 115a. Instead of the recording-capable/incapable report command Cr, recording-capable/incapable information indicative of whether the recording apparatus 200a is capable of recording or not may be supplied from the command transmitter/receiver 214 to the command transmitter/receiver 114.

The command transmitter/receiver 114 detects a change in state of the recording apparatus 200a (recording-capable or recording-incapable), and outputs a recording-capable/incapable detection signal Sdr to the playback controller 115a.

The input section 116 is preferably structured by a transmitter/receiver device, such as a remote controller, for supplying the playback controller 115a with an operation signal SO1 indicative of an instruction from a user to the playback apparatus 100a. The input section 116 may be a keyboard, a touch panel-type, or a GUI input section directly mounted on the playback apparatus 100a or the recording apparatus 200a.

The playback controller 115a controls the entire operation of the playback apparatus 110a based on the operation signal SO1 and the recording-capable/incapable detection signal Sdr supplied from command transmitter/receiver 114. The playback controller 115a mainly controls, through the data manager 111, playback and reading of the content data Dc from the storage section 110. Furthermore, when it is detected based on the recording-capable/incapable detection signal Sdr that the recording apparatus 200a is incapable of recording, the playback controller 115a transmits a playback stop signal Spq to the data manager 111 to stop content playback.

Furthermore, the playback controller 115a outputs a process request Rdc regarding the content data Dc to the data manager 111. The process request Rdc includes a content data transmission request Rsc for causing the content data Dc to be output to the data transmitter 112a, and a untransmitted content data deletion/retention request Rdce. This process is described further below in detail with reference to FIGS. 2 and 3. One external factor that makes the recording apparatus 200a incapable of recording is that the recording apparatus 200a is powered off for some reason.

The data manager 111 designates a process of the content data Dc stored in the storage section 110 based on the process request Rdc output from the playback controller 115a.

The recording apparatus 200a includes a storage section 210, a data receiver 212, a command transmitter/receiver 214, a recording controller 215, and an input section 216. The data receiver 212 is connected to the data transmitter 112a of the playback apparatus 100a for forwarding various data including content data Dc to the recording controller 215. As with the input section 116, the input section 216 supplies the recording controller 215 with an operation signal SO2 indicative of an instruction from the user to the playback apparatus 200a.

The data receiver 212 is connected to the data transmitter 112a of the playback apparatus 100a for supplying the received content data Dc to the recording controller 215. The command transmitter/receiver 214 is connected to the command transmitter/receiver 114 of the playback apparatus 100a for supplying a request signal SR to the recording controller 215. The request signal SR includes a recording start signal SRb, a recording stop signal SRq, and a recording-capable/incapable inquiry signal SRs.

The recording controller 215 controls the entire operation of the recording apparatus 200a based on the operation signal SO2 supplied from the input section 216 and the request signal SR supplied from the command transmitter/receiver 214. The operation to be controlled includes an operation of the storage section 210 for recording the content data Dc. Furthermore, in response to the recording-capable/incapable inquiry signal SRs included in the request signal SR, the recording controller 215 generates a recording-capable/incapable signal SSr indicative of whether the storage section 210 is capable of recording or not for output to the command transmitter/receiver 214.

The command transmitter/receiver 214 generates a recording-capable/incapable report command Cr based on the recording-capable/incapable signal SSr supplied from the recording controller 215 for output to the command transmitter/receiver 114. The recording-capable/incapable report command Cr includes at least a recording-incapable report command Crn indicating that the storage section 210 has changed in state from recording-capable to recording-incapable, and a recording-capable report command Cre indicating that the storage section 210 has changed in state from recording-incapable to recording-capable.

With reference to FIG. 2, the concept of a content transfer process in the present invention is described below in view of the content data Dc stored in the storage section 110. In FIG. 2, a lapse of time is represented in a direction from left to right. In this lapse of time, the content transfer process has four distinctive stages, which are illustrated as stage 1, stage 2, stage 3, and stage 4. Stage 4 further includes two stages, stage 4A and stage 4B, which are described further below in detail.

An arbitrary content C stored in the storage section 110 is structured by n (n is an arbitrary natural number) pieces of content data Dc. To transfer the content C from the playback apparatus 100a to the recording apparatus 200a, n pieces of content data Dc have to be respectively read from the storage section 110 for transmission to the recording apparatus 200a. The content data Dc is a unit of transmission from the playback apparatus 100a to the recording apparatus 200a.

That is, a single piece of content data Dc cannot construct content information, and only several pieces of content data Dc can collectively form a unit of information as a content. In this case, n pieces of content data Dc are set by the data manager 111 as target content data Dct1 through Dctn.

Stage 1 schematically illustrates how the state of the content data Dc stored in storage section 110 is managed by using a table when the content C is designated to be transferred to the recording apparatus 200a. The state of content data Dc may be managed by using a function, for example, instead of the table.

On the table of stage 1, n pieces of content data Dct that construct the target content data Dc are respectively shown as target content data Dct1 through Dctn in the left column, and states of the respective target content data Dct concerning management by the data manager 111 for transmission are shown in the right column (such states are hereinafter referred to "management states", and are denoted as "MS" in FIG. 2 ). That is, in stage 1, the pieces of content data Dc that construct the content C are just designated to be transferred, and therefore all pieces of target content data Dct1 through Dctn are set as being "not-yet" transmitted (denoted as "nY." in FIG. 2).

In stage 2, the management states after the target content data Dct1 has been read from the storage section 110 in stage 1 by the data manager 111 are illustrated. At this point, the data manager 111 may output the read target content data Dct1 to the data transmitter 112a. In view of copyright protection, however, such output from the data transmitter 112a to the recording apparatus 200a is not desirable. Even so, from the standpoint of the storage section 110, the target content data Dct1 is read for output anyway, and therefore the content data Dct1 is set as "provisional" target content data (denoted as "P" in FIG. 2). If required, the target content data Dct1 may be transmitted to the recording apparatus 200a, but it is never desirable to record the target content data Dct1 in the storage section 210.

To ensure content transfer, however, the content data Dc has to exist in both the playback apparatus 100a and the recording apparatus 200a for a predetermined time period. From the viewpoint of this, in the present embodiment, management is performed so that the same content (content data Dc) having a length longer than one minute does not exist as being playable in the playback apparatus 100a and the recording apparatus 200a at the same time, which is based on "ARIB TR-B14 ground wave digital television broadcasting operation rules, volume 8, content protection rules" by ARIB (Association of Radio Industries and Businesses).

In the present invention, each content data Dc, which is a unit of transfer, is set so that its playback time is shorter than one minute. Therefore, the content data Dc read from the playback apparatus 100a is allowed to exist in both the playback apparatus 100a and the recording apparatus 200a at the same time. However, the content data Dc in the playback apparatus 100a is deleted before another content data Dc to be read next is transmitted to or recorded in the recording apparatus 200a. Note that, in the present embodiment, each piece of content data Dct1 through Dctn is set so that its playback time is shorter than thirty seconds.

In stage 3, the management states after the target content data Dct2 has been read from the storage section 110 in stage 2 are illustrated. Also at this point, the target content data Dct1 previously read and the target content data Dct2 read at this time are transmitted to the recording apparatus 200a, but whether they have been recorded in the recording apparatus 200a is not yet confirmed. Therefore, the target content data Dct1 and Dct2 are not deleted from the playback apparatus 100a. Note that, in the present embodiment, recording in the recording apparatus 200a is tested on two pieces of target content data Dct, that is, the target content data Dct1 and Dct2. However, the number of pieces of content data Dc to be tested can be arbitrarily determined based on the playback time of each content data Dc and the total playback time of the content C that is allowed to exist in both apparatuses at the same time.

In stage 4, two types of management states occurs, stage 4A and stage 4B, depending on whether the recording apparatus 200a is capable of recording or not. In stage 4A, the management states are illustrated in a case where the recording apparatus 200a is capable of recording when the target content data Dct1 and Dct2 are about to be written. In this case, with the target content data Dct1 and Dct2 regarded as being surely recorded in the recording apparatus 200a, the data manager 111 deletes the target content data Dct1 and Dct2 from the storage section 110, and also deletes them from management.

There may be a possibility that the recording apparatus 200a may become incapable of recording between the time the recording apparatus 200a is determined as being capable of recording and the time the target content data Dct1 and Dct2 are actually about to be written in the storage section 210. To eliminate such possibility, it is technically desirable that the target content data Dct1 and Dct2 be deleted after they have been actually written in the storage section 210. In this sense, the present invention allows the content data Dct1 and Dct2 forming a content whose playback time does not exceed one minute to exist in both the storage section 110 and the storage section 210 at the same time.

In stage 4B, the management states are illustrated in a case where the recording apparatus 200a is incapable of recording when the target content data Dct1 and Dct2 are about to be written. In this case, the target content data Dct1 and Dct2 are confirmed to have not been written in the recording apparatus 200a. Therefore, the target content data Dct1 and Dct2 are not deleted, and are set as being "not-yet" transmitted for management. Consequently, the states in stage 4B becomes the same as those in stage 1. Note that the target content data may repeatedly become the states in stage 2 and then stage 3 until the recording apparatus 200a becomes capable of recording.

With reference to a flowchart shown in FIG. 3, the content transfer process in the content transfer system SDCa is described below in view of the respective components of the playback apparatus 100a and the recording apparatus 200a. The content transfer process is started when the user operates the input section 116 and the input section 216 for issuing instructions to the playback apparatus 100a and the recording apparatus 200a for transfer of the content C stored in the storage section 110. Alternatively, the content transfer process may be started with an instruction to only either one of the playback apparatus 100a and the recording apparatus 200a.

More specifically, the content transfer process of the playback apparatus 100a is started when the playback controller 115a detects a playback process instruction for content transfer based on the operation signal SO1. Similarly, the content transfer process of the recording apparatus 200a is started when the recording controller 215 detects a recording process instruction for content transfer based on the operation signal SO2.

In step S2, the playback controller 115a designates a content C to be transferred and one or more pieces of content data Dc that constructs the content C. The control procedure then goes to the next step S3.

In step S3, the playback controller 115a generates a transmission request Rdct for the content data Dc designated in step S2. The transmission request Rdct is issued to the data manager 111 as part of the process request Rdc. The control procedure then goes to the next step S4.

In step S4, the data manager 111 makes inquires to the storage section 110 based on content data information Idc indicative of the content data Dc of the designated content C. Based on the inquiry results, whether the content data Dc requested fro transmission is stored in the storage section 110 is determined . If it is determined that the content data Dc is stored, the procedure goes to the next step S6.

In step S6, the data manager 111 obtains information about the content data Dc as information about the target content data Dct. Then, the management process in the above-mentioned stage 1 is performed. That is, the target content data Dct1 through Dctn are all set as being "not-yet" transmitted. The control procedure then goes to the next step S8.

In step S8, to transfer the content C designated in step S2 to the recording apparatus 200a, the data manager 111 outputs a storage section control signal SSc to the storage section 110. With this, the content data Dct1 through Dctn are appropriately read from the storage section 110, and are transmitted through the data manager 111 and then the data transmitter 112a to the recording apparatus 200a. As described above, in step S8, control is performed such that the total playback time of the pieces of target content data Dct to be transmitted to the recording apparatus 200a does not exceed one minute. The control procedure then goes to the next step S10.

In step S10, the data manager 111 sets the target content data Dct read in step S8 as provisional target content data Dctt for management. At this point, the management processes of stages 2 and 3 are performed. The control procedure then goes to the next step S12.

In step S12, the playback controller 115a determines, based on the recording-capable/incapable detection signal Sdr supplied from the command transmitter/receiver 114, whether the recording apparatus 200a is capable of recording. If it is determined that the recording apparatus 200a is capable of recording, the control procedure goes to step S14.

In step S14, the target content data Dct read in step S8 from the storage section 110 and set in step S10 as the provisional target content data Dctt is regarded as being going to be recorded in the recording apparatus 200a. The data manager 111 then generates a content data delete instruction signal SScd for input to the storage 110.

Based on this content data delete instruction signal SScd, the target content data Dct (provisional target data Dctt) is deleted from the storage section 110. At this point, the management process of stage 4A is performed. The control procedure then goes to the above-mentioned step S4.

On the other hand, when it is determined in step S12 that the recording apparatus 200a is not capable of recording, the control procedure goes to step S16.

In step S16, the provisional target content data Dctt is set as untransmitted content data Dctn. At this point, the management process of stage 4B is performed. In this way, the control procedure ends without performing transmission or deletion of the provisional target content data Dctt.

As described above, in the present embodiment, if the recording apparatus 200a has changed in state from recording-capable to recording-incapable while the content stored in the storage section 110 of the playback apparatus 100a is transferred to the recording apparatus 200a, the operation of playing back the content C carried out by the data manager 111 can be stopped. That is, when the recording apparatus is incapable of recording, the content playback process of the playback apparatus is stopped.

The above stop operation is effective particularly in a case where the content C is transferred, that is, when the content C stored in the storage section 110 is read and deleted. In this case, if the recording apparatus 200a has changed in state from recording-capable to recording-incapable, processes of reading and deleting the content C are both stopped, thereby preventing the content C from being lost.

Needless to say, the playback controller 115a may be provided to an apparatus other than the playback apparatus 100a for externally controlling the playback apparatus 100a. Similarly, the recording controller 215 may be provided to an apparatus other than the recording apparatus 200a for externally controlling the recording apparatus 200a. Alternatively, the playback apparatus 100a and the recording apparatus 200a are provided to the same apparatus. Still alternatively, the playback controller 115a and the recording controller 215 may be integrated as a playback/recording controller provided external to the playback apparatus 100a and the recording apparatus 200a. Still alternatively, the storage section 110 may be on a network such as an IEEE 1394-compliant network, the Internet, or a broadcast network.

Also, the content transfer system of the present embodiment can be achieved by controlling each means based on a computer program. With this computer program recorded on a recording medium such as a flexible disk, the content transfer system can be transferred for easy implementation in another playback control apparatus.

As described above, in the present embodiment, the playback time of the content data Dc is set as a condition for allowing the same content data Dc to exist in both the playback apparatus 100a and the recording apparatus 200a at the same time, according to the rules stipulated by the ARIB. This is not meant to be restrictive. Alternatively, a time period allowing the same content data Dc to exist in both the playback apparatus 100a and the recording apparatus 200a at the same time may be set as the above condition.

### (Second embodiment)

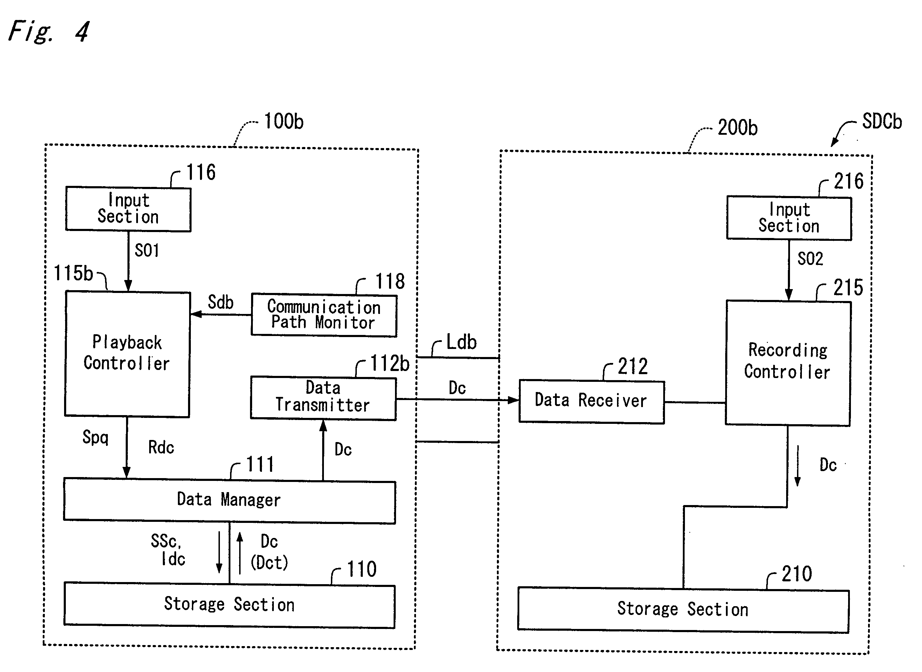

FIG. 4 illustrates the configuration of a content transfer system according to a second embodiment of the present invention. A content transfer system SDCb is different from the content transfer system SDCa illustrated in FIG. 1 in that the playback apparatus 100a and the recording apparatus 200a are replaced with a playback apparatus 100b and a recording apparatus 200b. The playback apparatus 100b is different from the playback apparatus 100a in that the data transmitter 112a is replaced with a data transmitter 112b, the playback controller 115a is replaced with a playback controller 115b, and the command transmitter/receiver 114 is replaced with a communications path monitor 118. The recording apparatus 200b is different from the recording apparatus 200a in that the command transmitter/receiver 214 is removed.

The playback apparatus 100b and the recording apparatus 200b are connected to each other via a data communications path Ldb. The data communications path Ldb is a removable path for communications between the playback apparatus 100b and the recording apparatus 200b. The communications path monitor 118 detects a physical or logical cutoff of the data communications path Ldb for generating a communications path cutoff detection signal Sdb for output to the playback controller 115b.

Based on the communications path cutoff detection signal Sdb, the playback controller 115b outputs a reproduction stop signal Spq to the data manager 111 for stopping playback of the content C carried out by the data manager 111.

The content transfer process in the second embodiment is similar to that in the first embodiment except that determination in step S12 of the flowchart shown in FIG. 3 is made based on the communications cutoff detection signal Sdb.

As described above, in the second embodiment, the operation of playing back the content C carried out by the data manager 111 can be stopped even when the data communications path Ldb is physically or logically cut off while the content stored in the storage section 110 of the playback apparatus 100b is transferred to the recording apparatus 200a.

### (Third embodiment)

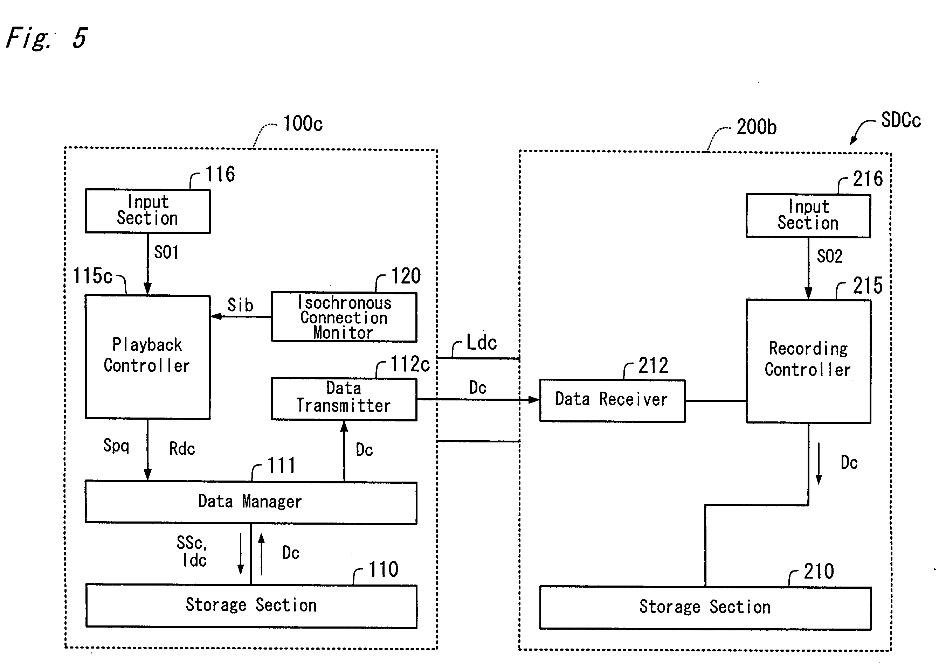

FIG. 5 illustrates the configuration of a content transfer system according to a third embodiment of the present invention. A content transfer system SDCc is different from the content transfer system SDCb illustrated in FIG. 4 in that the playback apparatus 100b is replaced with a playback apparatus 100c and the data communications path Ldb is replaced with a data communications path Ldc. The playback apparatus 100c is different from the playback apparatus 100b in that the data transmitter 112b is replaced with a data transmitter 112c, the playback controller 115b is replaced with a playback controller 115c, and the communications path monitor 118 is replaced with an isochronous connection monitor 120.

The data transmitter 112c transmits the content data Dc of the content C played back by the data manager 111 in compliance to the IEEE 1394 standards. The data communications path Ldc is a communications path capable of establishing IEEE 1394-compliant isochronous connection for communication with the recording apparatus 200b. When isochronous connection on the data communications path Ldc is cut off, the isochronous connection monitor 120 generates an isochronous connection cutoff detection signal Sib indicating that isochronous connection has been cut off, and outputs the isochronous cutoff detection signal Sib to the playback controller 115c.

When isochronous connection is cut off, the playback controller 115c transmits a playback stop signal Spq to the data manager 111 based on the isochronous connection cutoff detection signal Sib for stopping the data manager 111 playing back the content C.

The content transfer process in the third embodiment is similar to that in the first embodiment except that determination in step S12 of the flowchart shown in FIG. 3 is made based on the isochronous connection cutoff detection signal Sib. Furthermore, as described above, the third embodiment is different in that the data transmitter 112c transmits the content data Dc in compliance to the IEEE 1394 standards.

As described above, in the third embodiment, the operation of playing back the content C carried out by the data manager 111 can be stopped when isochronous connection on the data communications path Ldc is cut off while the content stored in the storage section 110 of the playback apparatus 100c is transferred to the recording apparatus 200a.

The above stop operation is effective particularly in a case where the content C is transferred, that is, when the content C stored in the storage section 110 is read and deleted. In this case, when isochronous connection on the data communications path Ldc is cut off, read and deletion of the content C are both stopped, thereby preventing the content C from being lost.

### (Fourth embodiment)

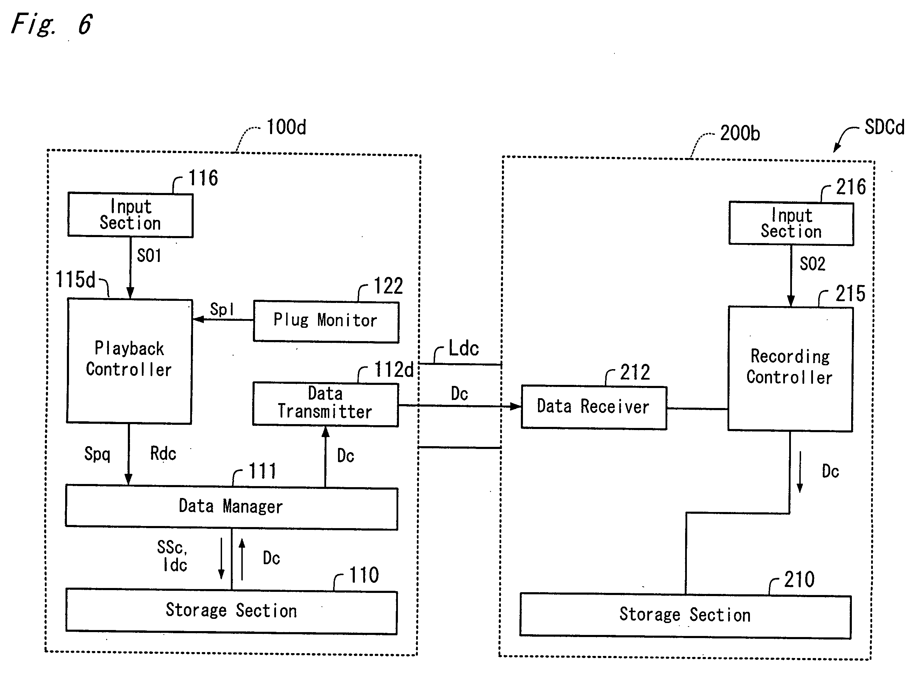

FIG. 6 illustrates the configuration of a content transfer system according to a fourth embodiment of the present invention. A content transfer system SDCd is different from the content transfer system SDCc illustrated in FIG. 5 in that the playback apparatus 100c is replaced with a playback apparatus 100d, the isochronous connection monitor 120 is replaced with a plug monitor 122, and the data transmitter 112c is replaced with a data transmitter 112d.

When an online bit of a plug control register for isochronous connection established on the data communications path Ldc between the playback apparatus 100d and the recording apparatus 200b is OFF, the plug monitor 122 detects information indicating that the online bit is OFF, and generates a plug monitor signal Spl. The playback controller 115d transmits a playback stop signal Spq to the data manager 111 based on the plug monitor signal Sp1 when the online bit of the plug control register for isochronous connection is OFF, thereby stopping the data manager 111 playing back the content C.

The content transfer process in the fourth embodiment is similar to that in the first embodiment except that determination in step S12 of the flowchart shown in FIG. 3 is made based on the plug monitor signal SPl.

As described above, in the fourth embodiment, the operation of playing back the content C carried out by the data manager 111 can be stopped even when the online bit of the plug control register for isochronous connection established on the data communications path Ldc between the playback apparatus 100d and the recording apparatus 200b is OFF while the content stored in the storage section 110 of the playback apparatus 100d is transferred to the recording apparatus 200a.

The above stop operation is effective particularly in a case where the content C is transferred, that is, when the content C stored in the storage section 110 is read and deleted. In this case, even when the online bit of the plug control register for isochronous connection established on the data communications path Ldc between the playback apparatus 100d and the recording apparatus 200b is OFF, read and deletion of the content are both stopped, thereby preventing the content from being lost.

As described above, the playback control apparatus of the present invention is provided with a command receiver that detects, during dubbing from the playback apparatus to the recording apparatus, information indicating that the recording apparatus has changed in state from recording-capable to recording-incapable; a command receiver that detects, during dubbing, information indicating that the recording apparatus has been powered off; or a communications path monitor that detects, during dubbing, information indicating that a path for communications between the playback apparatus and the recording apparatus has been cut off, and a playback controller that automatically stops playback of a content. With this structure, it can be detected that the recording apparatus has changed to a state of being incapable of recording, and the playback apparatus can be automatically stopped playing back.

While the invention has been described in detail, the foregoing description is in all aspects illustrative and not restrictive. It is understood that numerous other modifications and variations can be devised without departing from the scope of the invention.

## Claims

1. A playback control apparatus (111, 115a, 112a) that controls operations of playing back a content (C) supplied from a content source (110) and transmitting the content to a recording apparatus (200a) for achieving external transfer or copy carried out by a playback apparatus (100a), comprising:
content data transmitting means (111, 112a) for sequentially transmitting a plurality of pieces of content data (Dc1-Dcn) that form the content (C) from the content source (110) to the recording apparatus (200a);
recording apparatus monitoring means (114, 115) for determining whether the recording apparatus (200a) is capable of recording; and
content data transmission control means (111, 115a) for controlling the content data transmitting means (111, 112a) based on the determination result obtained by the recording apparatus monitoring means (114, 115).

2. The playback control apparatus (111, 115a, 112a) according to claim 1, wherein
when the recording apparatus monitoring means (114, 115) determines that the recording apparatus (200a) is not capable of recording, the content data transmission control means (111, 115a) prohibits the content data transmitting means (111, 112a) from transmitting the plurality of pieces of content data (Dc) .

3. The playback control apparatus (111, 115a, 112a) according to claim 1, wherein
when the recording apparatus monitoring means (114, 115) determines that the recording apparatus (200a) is capable of recording, the content data transmission control means (111, 115a) causes the content data transmitting means (111, 112a) to delete the transmitted plurality of pieces of content data (Dct) from the content source (110).

4. The playback control apparatus (115a) according to claim 1, wherein
the recording apparatus monitor means (114, 115a) determines whether the recording apparatus (200a) is capable of recording based on state information (Cr) reported from the recording apparatus (200a), the state information indicating that the recording apparatus (200a) has changed to a state of being incapable of recording.

5. The playback control apparatus (115a) according to claim 4, wherein
the state information (Cr) indicates that the recording apparatus (200a) has changed to a state of being powered off.

6. The playback control apparatus (115b) according to claim 1, wherein
the recording apparatus monitoring means (115b, 118) includes communications path monitor means (118) for detecting whether a communications path (Ldb) for communications with the recording apparatus (200a) has been cut off, and when the communications path monitor means (118) detects that the communications path (Ldb) has been cut off, determines that the recording apparatus (200a) is incapable of recording.

7. The playback control apparatus (115c) according to claim 1, wherein
the recording apparatus monitoring means (115b, 120) includes communications path monitor means (120) for detecting whether isochronous connection for communications with the recording apparatus has been cut off, and when the communications path monitoring means (120) detects that the isochronous connection has been cut off, determines that the recording apparatus (200a) is incapable of recording.

8. The playback control apparatus (115d) according to claim 1, wherein
the recording apparatus monitoring means (115c, 122) includes plug monitor means (122) for detecting whether an online bit of a plug control register corresponding to isochronous connection for communications with the recording apparatus (200a) is OFF, and when the plug monitor means (122) detects that the online bit of the plug control register is OFF, determines that the recording apparatus (200a) is incapable of recording.

9. A recording apparatus (200a) that records a content (C) transmitted from a playback apparatus (100a) for achieving transfer of the content (C) from the playback apparatus (100a), comprising:
content recording means (210, 215) for recording the content transmitted from the playback apparatus (100a) on a recording medium (210); and
state information generating means (215, 214) for generating state information (Cr) indicating whether the content recording means (210, 215) is capable of recording the content (C).

10. A playback control method that controls operations of playing back a content (C) supplied from a content source (110) and transmitting the content to a recording apparatus (200a) for achieving external transfer carried out by a playback apparatus (100a), comprising:
a content data transmitting step (S4-S8) of sequentially transmitting a plurality of pieces of content data (Dc1-Dcn) forming the content (C) from the content source (110) to the recording apparatus (200a);
a monitoring step (S12) of determining whether the recording apparatus (200a) is capable of recording; and
an inhibiting step (S16) of inhibiting the content data transmitting step (S4-S8) when it is determined in the monitoring step (S12) that the recording apparatus (200a) is not capable of recording.

11. The playback control method according to claim 10, further comprising a content data deleting step (S14) of deleting the transmitted plurality pieces of content data (Dct) from the content source (110) when it is determined in the monitoring step (S12) that the recording apparatus (200a) is capable of recording.

12. A recording control method that controls an operation of recording a content (C) transmitted from the playback apparatus (100a) for achieving transfer of the content (C) from the playback apparatus (100a) carried out by a recording apparatus (200a), comprising
a content data recording step of recording the content transmitted from the playback apparatus (100a) in a recording medium (210); and
a state information generating step of generating state information (Cr) indicating whether the content recording step can be performed.

13. A computer program causing a computer to execute the playback control method according to claim 10.

14. A computer readable medium having stored therein a program causing a computer to perform the playback control method according to claim 10.

15. A computer program causing a computer to execute the recording control method according to claim 12.

16. A computer readable medium having stored therein a program causing a computer to perform the recording control method according to claim 12.
